# EUROPEAN PATENT APPLICATION

(11) **EP 3 893 395 A2**
(43) Date of publication of application: **13.10.2021**
(21) Application number: 21159849.5
(22) Date of filing: 01.03.2021
(51) Int. Cl.: H03K 19/00

(54) **CMOS STANDARD CELL STRUCTURE WITH LOWER DATA DEPENDENCE OF THE STATIC POWER CONSUMPTION**

(30) Priority: 19.03.2020 CZ 20200153
(71) Applicant: Ceské vysoké ucení technické v Praze, 16000 Praha 6- Dejvice (CZ)
(72) Inventor: BELOHOUBEK, Jan, 33202 Stary Plzenec (CZ); FISER, Petr, 25206 Davle (CZ); SCHMIDT, Jan, 11000 Praha 1 (CZ)
(74) Representative: Kratochvil, Vaclav

(57) **Abstract**

The PMOS block (104) is connected between the virtual supply node (102) and output (101). The NMOS block (105) is connected between the virtual ground node (103) and output (101). The input of the balancing inverter chain (200, 300, 400) is connected to the output O (101). The balancing inverter chain is composed of at least one inverter and the output of the chain is the output (Y) of the structure. The static CMOS circuit (100) is supplemented with any combination of the following circuits. The virtual supply node (102) is connected to the supply rail by a serial P-type transistor (111), which gate (G), is connected to the ground rail. The virtual ground node (103) is connected to the ground rail by the serial N-type transistor (112), which gate (G) is connected to the supply rail. The virtual supply node (102) is connected to the output (101) by the complementary P-type transistor (121). The virtual ground node (103) is connected to the output (101) by the N-type complementary transistor (122).

## Description

### Field of the Invention

The presented invention relates to new CMOS structures that decrease the data dependence between the processed data and the static power consumption of the circuit. The cell design reduces in particular the data dependence of the static power consumption induced by injecting energy to the area occupied by unipolar transistor structures, for example by the illumination of the circuit. The solution belongs to the field of electronics and digital design.

The static power consumption, especially static power consumption induced by illumination of the circuit, can be used to compromise a device. The presented solution enhances the security by increasing the resistance against attacks on the device in which it is used. Complex VLSI CMOS circuits are built from basic elements called standard cells. The presented solution allows for implementation of a secured version of standard CMOS cells. In particular, the secured standard CMOS cell reduces the dependence of the induced static power consumption on the state of the data inputs of the secured cell, and also has a positive effect on the data dependence of the static power consumption of the CMOS circuit, the leakage.

### State of the Art

Existing solutions that enhance the resistance of VLSI CMOS circuits against physical attacks exploiting the so-called side channel attacks, focus in particular on prevention of attacks that target the dependence between the circuit dynamic power consumption and the processed data. One of the options for protecting the CMOS circuits is to achieve constant, data-independent consumption. For this purpose, increasing the circuit symmetry using complementary dual-rail logic is often used. The dual-rail logic is described, for example, in the document SPARSØ, Jens; FURBER, Steve. Principles of asynchronous circuit design - A System Perspective. Kluwer Academic Publishers, 2002. An example of solution that uses the dual-rail logic symmetry is the WDDL, Wave Dynamic Differential Logic, see the document US8947123B2. A similar solution, based on mutual balancing of complementary values in identical circuits with complementary inputs is the HDRL, Homogeneous Dual-Rail Logic, US8395408B2.

Although dynamic power consumption represents a more significant data-dependent side channel in a CMOS circuit, recent research has also identified the vulnerability of CMOS circuits based on the static power data dependence, as mentioned, for example, in MOOS, Thorben; MORADI, Amir; RICHTER, Bastian. Static Power Side-Channel Analysis - An Investigation of Measurement Factors. IEEE Transactions on Very Large Scale Integration (VLSI) Systems, 2019, and in particular illumination-induced static power consumption, see BELOHOUBEK, Jan; FISER, Petr; SCHMIDT, Jan. CMOS Illumination Discloses Processed Data. In: 2019 22nd Euromicro Conference on Digital System Design (DSD). IEEE, 2019. p. 381-388.

The disadvantages of the solutions used as protection against attacks on dynamic power caused mainly by the impossibility to eliminate manufacturing variations, and also by the insufficient symmetry of complementary structures, are removed in static CMOS logic in the so-called SecLib, see GUILLEY, Sylvain, et al. CMOS structures suitable for secured hardware. In: Proceedings Design, Automation and Test in Europe Conference and Exhibition. IEEE, 2004. p. 1414-1415, where significant symmetry in the power consumption of a static CMOS circuit is achieved using structures with high symmetry and implicit synchronization. Thanks to the high symmetry, this solution provides also resistance against attacks on the static power consumption of the CMOS circuit, but at the cost of a significant area overhead of standard cells which increases the price of the design and has also negative impact on some security aspects, as presented in BELOHOUBEK, Jan; FISER, Petr; SCHMIDT, Jan. CMOS Illumination Discloses Processed Data. In: 2019 22nd Euromicro Conference on Digital System Design (DSD). IEEE, 2019. p. 381-388.

Another approach providing an intrinsic protection against attacks on static and dynamic power consumption is the use of dynamic logic, such as domino logic, described in KRAMBECK, R. H.; LEE, Charles M.; LAW, H.-FS. High-speed compact circuits with CMOS. IEEE Journal of Solid-State Circuits, 1982, 17.3: 614-619, which can be used to build the dual-rail logic. The PMOS block in domino logic is composed of only a single transistor controlled by the clock signal and not by input signals, which significantly diminishes the dependence of the cell power consumption on the processed data. On the other hand, the design of dynamic logic requires a change in the standard design style. A disadvantage may also be the necessity to distribute the clock signal throughout the combinational logic.

Nonconventional or dedicated digital design approaches also employ the CMOS structures affecting the static power consumption or even the static power induced by illumination. The serial transistors widely used to disconnect unused circuit parts, intended to minimize the static power may affect the data dependence of the circuit static power. However, similar structures are designed and optimized to minimize static power, not for data dependence reduction. As an example, serial externally controlled PMOS transistors are employed in the approach described in US 2002141234. The other example described also in US 2002141234 is a serial arrangement of two inverters. These inverters are optimized for speed and/or drive current, while the data dependence reduction might be a side-effect. The data dependence reduction is caused by the fact, that any serial connection of two inverters represents a structure operating with complementary values. Even though the data dependence might be lowered as a side effect, it is not guaranteed, as the optimization process does not consider the size ratio between the balancing and balanced structure.

Also, the standard symmetrization method can be used to lower the data dependence of the static current. The symmetrization of a group of CMOS transistors is performed so that for each set of transistors between the supply rail and the output of the CMOS cell, all the serial transistor interconnects are duplicated and the transistors in the functionally equal blocks are permuted while preserving functionality. This is performed so that all permutations are represented in the resulting schematics. At the same time, the sizes of the transistors can be reduced up to the ratio given by the number of permutations. The described method of symmetrization of transistor groups removes the differences in consumption for permutations of the input variables of the CMOS circuit, for example 01 and 10, in such a way that the consumption becomes independent of the permutation and depends only on the Hamming weight of the input vector.

Light detectors are used in CMOS circuits as a key invasive light attack countermeasure. The detectors are conventionally designed to trigger the system-level alarm activating additional procedures acting as a reactive countermeasure. Such a light sensor is conventionally designed to secure a wide area of the chip, where it should trigger an alarm in case of any adversary illumination. A simple sensor based on a conventional PNP structure is described in US 2013200371.

The existing solutions described above provide a balance of static or light-induced static power consumption insufficiently, at the cost of a large increase in area and delay or require a change of integrated circuit design paradigm, i.e. a transition to implementation in dynamic logic. The significant increase of the circuit area is a disadvantage from the aspect of increased production costs and, secondarily, also the increased circuit power consumption. The increased area is also unacceptable from the illumination attack perspective, as it does increase the probability of inhomogeneous illumination of the protected part of the circuit and its protection or compensation part. As a result, the increased area may decrease the efficiency of compensation and suppress the ability to balance the light-induced data dependent photocurrent.

### Summary of the Invention

The above disadvantages are suppressed by the circuit structure that decreases the data dependence of the static power consumption of a static CMOS circuit according to the presented solution. This circuit is designed so that the protected static CMOS circuit mimics the function of a small constant current source and/or uses complementary logic values that induce complementary currents in different parts of the circuit.

The protected static CMOS circuit is composed of standard connections of PMOS and NMOS blocks. The PMOS block is connected between the virtual supply node connected to the supply rail and the output. The NMOS block is connected between the virtual ground node connected to the ground rail and the output. The summary of the new solution is that a known circuit is supplemented with at least one of the following variants or any combination of those, selected according to the required protection level and the structure of the original CMOS cell.

One variant is, that to the output of the static CMOS circuit, the output of the first balancing inverter is connected, the output of the balancing inverter is the output of the entire circuit.

In another variant, the virtual supply node is connected to the supply rail by a serial P-type transistor, with the drain connected to the virtual supply node, the source is connected to the supply rail, and the gate terminal is connected to the ground rail.

In another possible solution, the virtual ground node is connected to the ground rail by a serial N-type transistor, with the drain connected to the virtual ground node, the source is connected to the ground rail, and the gate terminal is connected to the supply rail.

In another variant, the virtual supply node is connected to the source of a complementary P-type transistor, with the drain connected to the output and the gate is connected to the supply rail, and/or the source of the complementary N-type transistor is connected to the virtual ground node, with the drain connected to the output and the gate is connected to the ground rail.

The basic connection can be further modified so that the connection of the gate terminal of the serial N-type transistor with supply rail and/or connection of the gate terminal of the complementary P-type transistor with the supply rail is implemented by connecting to the output of the light-sensitive inverter. This inverter is formed by a P-type transistor, the source of the P-type transistor is connected to the supply rail, its drain is connected to the N-type transistor drain through the node and the source of the N-type transistor is connected to the ground rail. Gates of the P-type transistor and the N-type transistor are both connected to the ground rail. The common node is the output of the first control signal, and it is connected with the gate of the N-type serial transistor and with the gate of the complementary P-type transistor. Together with the above modification, but also without it, an option is possible when to the output of the first control signal from the light-sensitive inverter, the input of an inverter with the output of the second control signal is connected. The connection of the gate of the serial P-type transistor, and/or connection of the gate of the N-type complementary transistor with the ground rail is implemented by connecting to the output of the second control signal. This output is connected to the gate of the P-type serial transistor and/or to the gate of the N-type complementary transistor.

Another improvement is also possible, where the input of the second balancing inverter is connected to the output of the first balancing inverter. The output of the second balancing inverter is the negative output of the standard cell and is also connected to the feedback inverter, the output of which is connected to the output of the first balancing inverter. This feedback inverter is implemented as a weak inverter with respect to the first balancing inverter.

The presented solution removes the disadvantages of the existing solution by deploying new structures at the level of the static CMOS cell architecture. The solution is based on structures of standard cells in the CMOS library, which provide balancing of static power consumption and light-induced static power consumption of the CMOS circuit at the cost of significantly less increase in area and delay of the circuit than with the existing alternatives. The new structures are designed to balance the static power consumption induced by the illumination of the circuit, without negatively affecting the data dependence of static power consumption, and combined with the standard method of increasing circuit symmetry, they allow to build standard CMOS cells with significantly reduced data dependence of static consumption and illumination-induced power consumption on input data.

The advantage of the proposed solution is that it reduces the data dependence between processed data and the circuit static power consumption and especially static power consumption induced by adding energy to the area with unipolar transistor structures, for example by illuminating the static CMOS circuit, using much smaller area than the closest known solution SecLib. The presented solution enhances the security of the device in which it is used.

### Brief description of the Drawings

The design of a secure standard CMOS cell with lower data dependence of induced static power consumption and neutral impact on static power consumption, the leakage, is described hierarchically for better clarity. Fig. 1 illustrates the logic structure of a protected standard CMOS cell with a positive output, Figs. 2a, 2b and 2c then illustrate the internal connection options of the basic CMOS circuit. The option of balancing using odd number of inverters is shown in Fig. 3. Fig. 4 illustrates the principle of the presented solution, where the new structures mimic the behavior of a small current source. Fig. 5 is the schematic of an AND CMOS cell that contains some of the presented solutions, thus forming a secure standard cell. Fig. 6a, 6b and 6c show the course of static, light-induced current consumption depending on the input data, illumination intensity and different security levels of the CMOS cell.

### Examples of Invention Embodiments

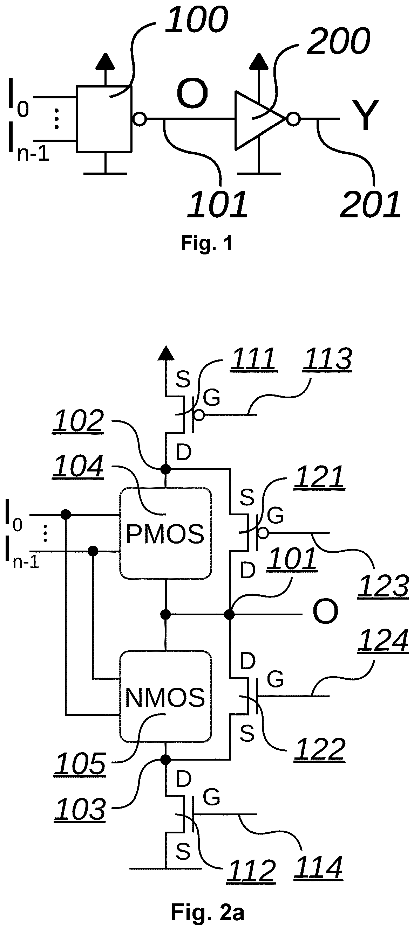

The secured CMOS standard cell consists of a static CMOS circuit 100 and a first balancing inverter 200, connected in series, Fig. 1. The entire circuit implements a logical function of n inputs denoted as I₀ to Iₙ₋₁, where n is a natural number. The output 201 of the secured standard cell, denoted as Y, is positive. The static CMOS circuit 100 is a circuit implementing a logical function with negative output 101, denoted on the drawing as output O for better clarity, and with n inputs I₀ to Iₙ₋₁. The output 101 of the static CMOS circuit 100 is connected to the input of the first balancing inverter 200, the output 201 of which is also the output of the entire standard cell.

The first balancing inverter 200 is implemented as a standard CMOS inverter with its size optimized according to static CMOS circuit 100, so that the sum of the static power consumption including the consumption induced by illumination of the first balancing inverter 200 and the static CMOS circuit 100 is for all combination of static CMOS circuit 100 inputs as close to constant as possible.

The first balancing inverter 200 may be omitted if a partial balancing of the static power consumption is sufficient and a negative output of the standard cell is required. If the first balancing inverter 200 is omitted, the output of the entire standard cell is the negative output O 101.

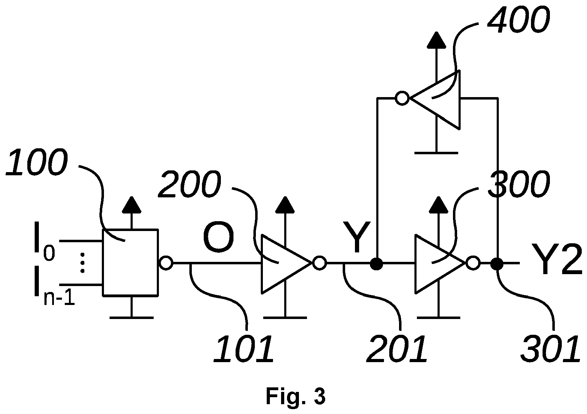

If a full balancing of the static power consumption is required and at the same time a negative output of the entire CMOS cell is required, a simple circuit with an odd number of inverters can be used, or the circuit in Fig. 3, where the output 201 of the first balancing inverter 200 is connected to the input of the second balancing inverter 300, output 301 of which, denoted as Y2, then represents the negative output of the secure cell. At the same time, output 301 is the input of feedback inverter 400, whose output is connected to the output 201 of the first balancing inverter 200.

Feedback inverter 400 is implemented in a standard way, for example by modification of the width of P and N channels, as weak compared to the first balancing inverter 200.

The above structure decreases the data dependence of the static power consumption, in particular by light-induced data-dependent photo-current of a CMOS circuit, because the resulting chaining of inverters and CMOS circuits with a negative output always contains pairs of CMOS circuits operating with complementary outputs. In a basic CMOS circuit, the output of the circuit is always in a static state, and for any combination of inputs it is connected to the supply or ground rail. Due to this, for each configuration of transistors forming the CMOS circuit, there is its complement in the chain with respect to the interconnection of the output and the supply or ground rail, which is used to mutually balance the static power consumption. In principle the balancing is performed in such a way that the size of the balancing structure is increased to correspond to the size of the balanced structure.

Balancing using an odd number of inverters, and therefore creating complementary logical functions with negative output, for example AND -> NAND, is possible using a feedback or by significant strengthening of selected inverters in the linear chain. The use of an odd number of inverters greater than 1 in series is necessary due to the need to maintain a high input impedance of the balanced cell. The feedback inverter allows to balance inverter loads in the chain in a more even way.

In both cases of balancing with an inverter, the output inverter, i.e. the first balancing inverter 200 or the second balancing inverter 300, also has the role of an output voltage filter and a driver of the next level of gates. The size of the output inverter may therefore not be significantly reduced. The reduction in size or optimization of delay can be done by modification of the size of transistors inside the inverter chain.

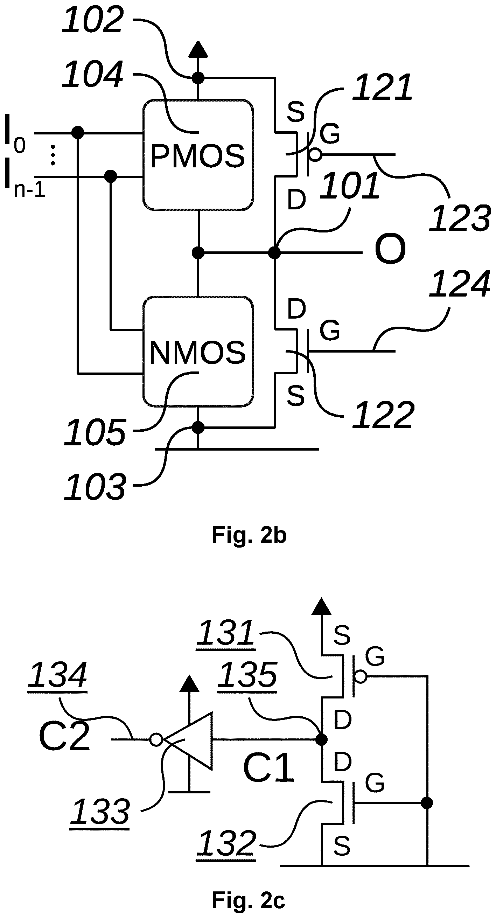

The inner structure of the static CMOS circuit 100 contains elements shown in Figs. 2a and/or 2b and/or 2c, i.e. either all of them or their various combinations according to the required protection level and the structure of the NMOS and PMOS blocks. The static CMOS circuit 100 always consists of a PMOS block 104, connected between the virtual supply node 102 and the output node 101, and NMOS block 105, connected between the virtual ground node 103 and the output node 101. The output node 101 is the output of static CMOS circuit 100.

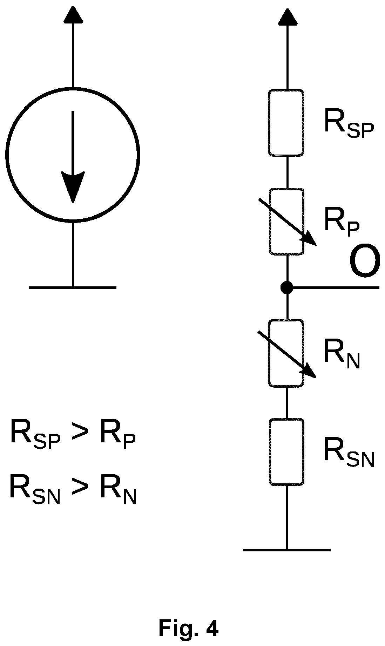

The decrease of the data dependence of the light-induced data dependent photo-current without increase of the data dependence of the static consumption in CMOS circuit 100 is achieved by mimicking the behavior of a small constant current source - see Fig. 4.

The mimicking of behavior of a small constant current source is achieved in two steps. The first is to increase the data-independent resistance component, i.e. to connect a static series resistance, and the second step is to decrease the data-dependent resistance component, i.e. to connect a low static resistance in parallel with the data-dependent potentiometer. In the CMOS technology, this is achieved by serial or parallel connection of transistors with respect to PMOS or NMOS blocks.

Serial transistors, i.e. here the serial P-type transistor 111 and the serial N-type transistor 112, see Fig. 2a, are used to mimic the behavior of the static part of the resistance. Parallel transistors, i.e. here complementary P-type transistor 121 and complementary N-type transistor 122, see Fig. 2b, are applied in case of illumination of the protected circuit, to which they react by a significant increase in conductivity.

The gates of the added serial or parallel complementary transistors can preferably be controlled based on the illumination intensity, thus allowing for better behavior for a large range of illumination intensity of the protected circuit.

The virtual supply node 102 is connected to the supply rail either directly, as illustrated in Fig. 2b, or through serial P-type transistor 111 using the method illustrated in Fig. 2a. The virtual ground node 103 is connected to the ground rail either directly, as illustrated in Fig. 2b, or through the serial N-type transistor 112 using the method illustrated in Fig. 2a.

Fig. 2a shows the possible connection of serial transistors 111 and 112. The serial P-type transistor 111, whose source S is connected to the supply rail, drain D to virtual supply node 102 and the terminal 113 of gate G is connected either to the ground rail or to the output 134 of the second control signal C2. The serial N-type transistor 112, whose source S is connected to the ground rail, drain D to virtual ground node 103 and terminal 114 of gate G is connected either to the supply rail or to the output 135 of the first control signal C1.

Fig. 2b shows the possible connection of parallel complementary transistors 121 and 122. The first complementary transistor 121 is a P-type transistor, whose source S is connected to the virtual supply node 102, drain D to the output O 101 and terminal 123 of gate G is connected either to the supply rail or to the common node 135, which is the output of the first control signal C1. The second complementary transistor 122 is a N-type transistor, whose source S is connected to the virtual ground node 103, drain D to the output O 101 and terminal 124 of gate G is connected either to the ground rail or to the output 134 of the second control signal C2.

Fig. 2c shows the possible connection of the control circuits, the outputs of which are the first control signal C1 and the second control signal C2. Transistors 131 and 132 form a light-sensitive inverter, with output 135 of the first control signal C1. The first transistor 131 is a P-type transistor, whose source S is connected to the supply rail drain D, drives the first output control signals C1 and gate G is connected to the ground rail. The second transistor 132 is a N-type transistor, whose source S is connected to the ground rail, the drain D drives the first output control signal C1 and gate G is connected to the ground rail. The standard CMOS inverter 133, to whose the output 135 of the first control signal C1 is connected, drives by its output 134 the second control signal C2. The P-type transistor 131 is built using standard methods, e.g. channel width modification, as weak compared to the N-type transistor 132.

Since the N-type transistors are significantly more illumination-sensitive, the required behavior of structures reacting to illumination intensity is achieved by a separate connection of N-type transistors with a base permanently connected to the ground, or by connecting the N-type transistor in series with the P-type transistors with significantly decreased conductivity. For structures where reaction to change in irradiation intensity is undesirable, the complementary N-type and P-type transistors are dimensioned in a standard way so that similar conductivity of the N-type and P-type transistors is achieved.

The inverter 133 is omitted if the output 134 of the second control signal C2 is connected neither to the serial P-type transistor 111 nor to the complementary N-type transistor 122. If the output 135 of the first control signal C1 is connected neither to the serial N-type transistor 112 nor to the complementary P-type transistor 121, and is not connected to the input of the inverter 133, also the transistors 131 and 132 which form the illumination-sensitive inverter are omitted.

The N-type transistor 132 operates as a light sensor, which opens if the protected circuit is illuminated. The value of the first control signal C1 exceeds the decision level when at least the threshold energy is supplied, whose amount is determined by the manufacturing technology, the ratio of the size and conductivity of channels and areas of drain D and source S of the P-type transistor 131 and the N-type transistor 132. Similarly, if the terminal 124 of gate G of the complementary N-type transistor 122 is connected to the ground rail, also this complementary N-type transistor 122 operates as a separate light sensor.

If the gate terminal G 113 of the P-type transistor 111 is connected to the ground rail, the conductivity of the P channel and the areas of terminals of the drain D and the source S of the serial P-type transistor 111 have to be adjusted so that this P-type serial transistor 111 efficiently limits the current between the supply conductor and the output 101, for the broadest energy range supplied to the CMOS circuit by, for example, its illumination.

If the gate terminal G 114 of the serial N-type transistor 112 is connected to the supply rail, the conductivity of its N channel and the area of terminals of the drain D and the source S have to be adjusted so that this N-type serial transistor 112 efficiently limits the current between the ground conductor and the output 101 for the broadest energy range supplied to the CMOS circuit by, for example, its illumination.

If the gate terminal G 124 is connected to the ground rail, the conductivity of the N channel and the area of the drain D and source S of the complementary N-type transistor 122 have to be adjusted so that it conducts the maximum possible induced current between the virtual ground node 103 and the output 101 for the broadest energy range supplied to the CMOS circuit by, for example, its illumination.

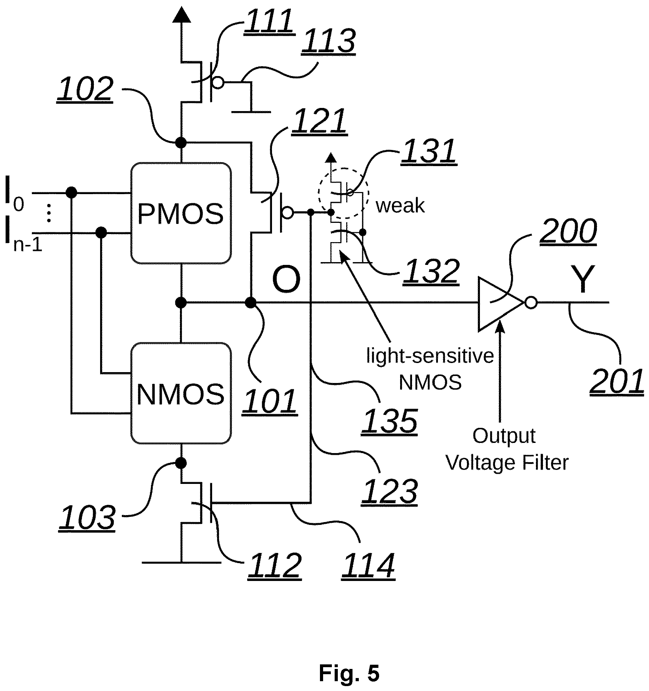

An example of a protected standard CMOS cell implemented using some of the mechanisms presented above is shown in Fig. 5. The PMOS and NMOS blocks may be internally symmetrical.

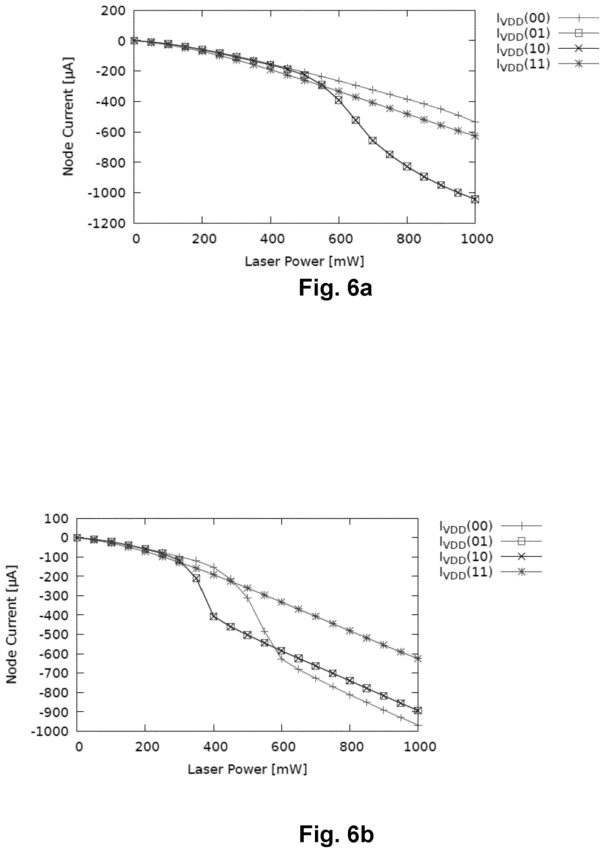

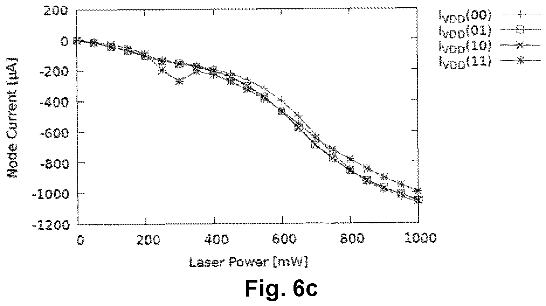

Fig. 6a, 6b and 6c show the static, light-induced current consumption depending on different security levels of the CMOS cell. Fig. 6a shows the dependence of static, light-induced current in the structure of a two-input NAND CMOS cell, with the first balancing inverter 200 on the output and symmetrical PMOS and NMOS blocks, on the density of energy supplied into the area of the CMOS cell corresponding to the power of laser on a normalized square area. Fig. 6b shows the same dependence of an identical CMOS cell enhanced with an additional serial P-type transistor 111. Fig. 6c shows the same dependence of an identical CMOS cell as Fig. 6b, where this CMOS cell is additionally provided with a control circuit that reacts to illumination, formed by P-type transistor 131 and N-type transistor 132, and controls N-type serial transistor 112 and P-type parallel transistor 121. This structure is illustrated in Fig. 5.

### Industrial Applicability

The presented solution has a good industrial applicability, for example, in the design of ASICs with increased security requirements. The solution is in particular suitable for designing of protected libraries of CMOS standard cells that form the basic blocks for implementation of a CMOS circuit. A balanced CMOS library will increase the security of any design that is implemented using it.

## Claims

1. A structure decreasing data dependence of static power consumption of a CMOS circuit, where a static CMOS circuit (100) contains standard connection of PMOS (104) and NMOS (105) blocks, where PMOS (104) block is connected between a virtual supply node (102) connected to a supply rail and an output O (101), and NMOS block (105) is connected between a virtual ground node (103) connected to a ground rail and the output O (101),
**characterized in that**
to the output (101) of the static CMOS circuit (100), an output of a first balancing inverter (200) is connected, an output (201) of which is an output (Y) of the entire circuit,
and/or
the virtual supply node (102) is connected to the supply rail by a serial P-type transistor (111), drain (D) of which is connected to the virtual supply node (102), a source (S) is connected to the supply rail, and a terminal (113), a gate (G), is connected to the ground rail,
and/or
the virtual ground node (103) is connected to the ground rail by a serial N-type transistor (112), drain (D) of which is connected to the virtual ground node (103), the source (S) is connected to the ground rail and a terminal (114), the gate (G), is connected to the supply rail,
and/or
to the virtual supply node (102), the source (S) of a complementary P-type transistor (121) is connected, drain (D) of which is connected to the output O (101), and a terminal (123), the gate (G), is connected to the supply rail,
and/or
to the virtual ground node (103), the source (S) of a complementary N-type transistor (122) is connected, drain (D) of which is connected to the output O (101), and a terminal (124), the gate (G), is connected to the ground rail.

2. The structure according to Claim 1 wherein an interconnection of terminal (114), the gate (G), of the N-type serial transistor (112) with the supply rail and/or an interconnection of terminal (123), the gate (G), of the P-type complementary transistor (121) with a supply conductor is implemented by connecting to an output of an illumination-sensitive inverter formed by a P-type transistor (131), whose source (S) is connected to the supply rail, the drain (D) is connected through a common node (135) to the drain (D) of an N-type transistor (132), whose source (S) is connected to the ground rail and where gate (G) of the P-type transistor (131) and of the N-type transistor (132) is connected to the ground rail, wherein the common node (135) is an output (C1) of the first control signal and it is connected to the terminal (114), the gate (G), of the N-type serial transistor (112) and with terminal (123), the gate (G), of the complementary P-type transistor (121)
and/or
to the output (C1) of the first control signal from illumination-sensitive inverter, the input of inverter (133) with output (134) of the second control signal (C2) is connected, wherein the connection of the gate (G) of the serial P-type transistor (111), and/or connection of the gate (G) of the complementary N-type transistor (122) with the ground rail is implemented by connecting to the output (134) of the second control signal (C2), which is connected to terminal (113) of gate (G) of the serial P-type transistor (111) and/or to terminal (124) of gate (G) of the complementary N-type transistor (122).

3. The structure according to any of Claims 1 or 2 wherein to the output (201) of the first balancing inverter (200), an input of a second balancing inverter (300) is connected, whose output (301) is the negative output of the structure and is also connected to a feedback inverter (400), whose output is connected to the output (201) of the first balancing inverter (200), wherein this feedback inverter (400) is implemented as weak inverter with respect to the first balancing inverter (200).
